**Europäisches Patentamt**

**European Patent Office**

**Office européen des brevets**

(19)

(11) Veröffentlichungsnummer:  **0 131 917**
A2

(12) **EUROPÄISCHE PATENTANMELDUNG**

(21) Anmeldenummer: **84108199.5**

(22) Anmeldetag: **12.07.84**

(51) Int. Cl.⁴: **H 04 B 5/00**
G 09 B 5/12, H 04 B 9/00

(30) Priorität: **13.07.83 AT 2565/83**

(43) Veröffentlichungstag der Anmeldung:
**23.01.85 Patentblatt 85/4**

(84) Benannte Vertragsstaaten:
**DE FR GB IT**

(71) Anmelder: Benesch, Fred
**Museumstrasse 9-11 I. Stock**
**A-6020 Innsbruck(AT)**

(72) Erfinder: Benesch, Fred
**Museumstrasse 9-11/I. Stock**
**A-6020 Innsbruck(AT)**

(72) Erfinder: Höck, Kurt, Dipl.-Ing.
**Dr. Stumpf Strasse 70**
**A-6020 Innsbruck(AT)**

(54) Mehrkanaltonübertragungssystem in Frequenzmultiplexbetrieb unter Verwendung von intensitätsmodulierter Infrarotstrahlung, insbesondere zur Ermöglichung der Wiedergabe von Tonaufzeichnungen auf Filmkopien, ausser der Originalsprache in gleichzeitig mehreren anderen Sprachen. (Sprachfassungen).

(57) Mehrkanal - Tonübertragungssystem in Frequenzmulti-plexbetrieb unter Verwendung von Intensitätsmodulierter Infrarotstrahlung, insbesondere zur Ermöglichung der Wiedergabe von Tonaufzeichnungen auf Filmkopien, Sprach- oder Gesangsdarbietungen außer der Originalsprache in gleichzeitig mehreren anderen Sprachfassungen.

Bei dieser Erfindung handelt es sich um eine Vorrichtung zur drahtlosen Übertragung mehrerer Tonsignale mittels Infrarotstrahlung (7) (8) (9) (10) zu einer Vielzahl von kleinen, sehr einfach aufgebauten Empfängern (11) die mit einem Wahlschalter (20) auf den Empfang des gewünschten Tonsignals eingestellt und mittels Kopfhörer abgehört werden können.

Bei der Anwendung im Kinobereich könnte die Filmkopie neben der Originaltonspur zusätzlich Tonspuren mit zugeordneten Simultanübersetzungen der Sprache führen, diese über eine Adapter zugleich abgetastet, dem Sender (2) zugeführt und von diesem über die Antennen (3 - 6) in den Kinosaal ausgestrahlt werden.

Auch die Geräteanordnung gemäß A/F Patent 36 22 32 als Einrichtung zur Wiedergabe der nachträglich synchronen Übersetzung der Sprache von Filmkopien könnte in Kombination mit der gegenständlichen Erfindung optimal erweitert werden.

Ein weiteres Anwendungsgebiet dieser Erfindung bieten die Sprech- und Gesangstheater.

Von der Originalaufführung des Stückes wird ein Mutter-band hergestellt, welches die Übersetzungseinsätze kodiert erhält.

Das Simultanband ist wie ausgeführt mehrspurig und wird vom Mutterband welches synchron zur Aufführung mitläuft, durch seine Kodierung schrittweise von Texteinsatz zu Texteinsatz geschaltet, wobei diese Schaltung je nach aufkopierter Kodierung auch die Souffleuse durch Tastendruck vornehmen oder auch korrigieren könnte.

Jede Spur des Simultanbandes ist daher einer bestimmten Sprache zugeordnet, deren Aufzeichnungssignal durch den Sender (2) über die Antennen (3 - 6) ausgestrahlt und von den Empfängern (11) je nach Frequenzwahl empfangen werden können.

Croydon Printing Company Ltd

Ing. Alfred Benesch

Fuchsrain 29
6020  INNSBRUCK

0131917

Mehrkanal- Tonübertragungssystem in Frequenzmultiplexbetrieb unter Verwendung von Intensitätsmodulierter Infrarotstrahlung, insbesondere zur Ermöglichung der Wiedergabe von Tonaufzeichnungen auf Filmkopien, Sprach- oder Gesangsdarbietungen außer der Originalsprache in gleichzeitig mehreren anderen Sprachfassungen.

In der Fachliteratur wie auch in der Praxis sind lediglich Simultananlagen für Vortrag- bzw. Konferenzsäle bekannt, diese das vorgetragene Wort einer bestimmten Sprache durch Dolmetscher übersetzt über eine Ringleitung mit Steckkontakten für Kopfhörer dem Zuhörer zuführten oder diese Übertragung mittels aufwendiger Induktionsschleifen als Saalinstallation, Sende- und Empfangsanlagen, vom Besucher wahlweise schaltbar, über Kopfhörer ermöglicht wird.

Diese Vorrichtungen waren in der Tat sehr aufwendig und daher kostenintensiv, da die drahtlose Mehrkanal-Tonübertragung nur mit großem Geräteaufwand undoft nur über Verwendung von Koinzidenzdemodulatoren gelöst wurde, wobei der schaltungstechnische Aufwand für die vielen notwendigen Empfangsgeräte recht umfangreich war.

Einen wesentlichen Fortschritt und Vereinfachung einer Simultanübersetzung fremdsprachiger Filmkopien brachte das A/Patent Nr. 36 22 32 in der Weise, daß mittels einer Vorrangschaltung durch Pilotton gesteuert der Originalton der Filmkopie zu Gunsten einer der gewünschten Sprachübersetzungen, diese auf den zusätzlich aufgetragenen Magnetton überspielt wurde, automatisch so weit in der Lautstärke zurückgeschaltet wird, daß die Übersetzung klar und deutlich im Saallautsprecher zu hören war.
Nach Beendigung der Übersetzungsdauer schaltete sich der Originalton automatisch wieder auf die gehabte volle Lautstärke.

Der Nachteil dieser Erfindung lag in der nicht individuellen Wählbarkeit der gewünschten Übersetzung der Originalsprache durch den Besucher oder Zuhörer. Zu erreichendes Ziel der gegenständlichen Erfindung war es daher, eine Gerätekombination zu entwickeln, die den vorher geschilderten Nachteil voll ausschaltet, um dem Saalbesucher bzw. Zuhörer die Möglichkeit der individuellen Wahl seiner gewünschten Sprachübersetzung selbst in die Hand zu geben.

Aufgabe der Erfindung war es daher, ein Infrarot-Übertragungssystem mit einem besonders einfachen Aufbau zu verwirklichen, wobei mehrere Tonsignale (mittels einer Hilfsträgermodulation in Frequenzmodulation) übertragen und mittels mobiler, durch geringe Stromaufnahme gekennzeichneter, Infrarot-Kleinstempfänger empfangen werden.

Gerade in der Entwicklung eines in der Fertigung billigen Mehrkanal-Empfangsgerätes liegt ein wesentliches Kriterium dieser Erfindung.

Ein Ausführungsbeispiel der Erfindung ist in den Zeichnungen dargestellt:

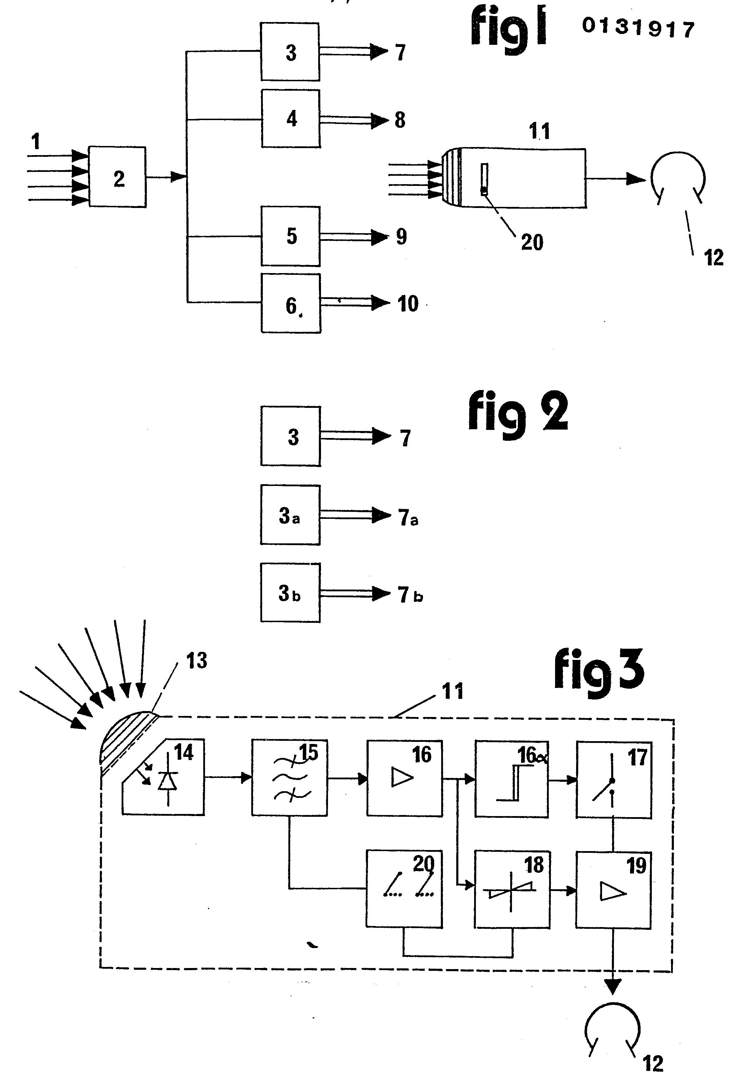

Fig. 1 zeigt die schematische Darstellung einer Infrarot-Übertragungsstrecke für 4 Tonsignale (1) bestehend aus dem Sender (2) , den Antennen (3-6) und

einer Vielzahl von Empfangsgeräten (11) mit Kopfhörer (12). Die Figur 2
zeigt die Leistungserweiterung einer Infrarotanordnung (3) durch phasenstarre Zuschaltung weiterer indentischer Infrarot-Antennenelemente (3a)
(3b) usw., Figur 3 zeigt die schematische Darstellung eines zum Empfang
gemäß Fig. 1 bzw. Fig. 2 erzeugter Infrarotsignale geeigneten Empfängers
(11) mit der Zylinderlinse (13), der Fotodiode (14), dem Filter (15), dem
Vorverstärker (16), der Schwellwertschaltung (16a), der Trennstufe (17),
der Phasenregelschaltung (18), dem NF-Verstärker (19), dem Kanalumschalter
(20) und dem Kopfhörer (12) mit austauschbarer Einweg-Hygienehaube.

Figur 4 zeigt ein für den Empfang von 4 Tonsignalen geeignetes Kanalschema mit den zugehörigen Demodulationskennlinien (21) (22) (23) (24).
Dargestellt ist der Verlauf der FM-Demodulator-Ausgangsspannung der
Phasenregelschaltung in Abhängigkeit von der Empfangsfrequenz undzwar für
jede der 4 Stellungen des Wahlschalters (20). Die einzelnen Empfangsfrequenzen sind so gewählt und der Frequenzbereich der Phasenregelschleife
ist für jede der enpfangenen Frequenzen so ausgelegt, daß bei Empfang einer
der gewünschten Frequenzen eine nicht gewünschte Freqzenz in dem betreffenden Empfangsfrequenzbereich der jeweiligen gewünschten Frequenz kein
Einrasten der Phasenregelschleife bzw. eine Oberwellensynchronisation,
d.h. ein Einrasten auf ein ungeradzahliges Vielfaches oder einen ungeradzahligen Teil jeder der unerwünschten Frequenzen, bewirkt.
Die in Fig. 4 dargestellten Kurven sind eine schematisch vereinfachte
Wiedergabe der mittels Wobbelmessung am Empfänger meßbaren Phasenregler-
Ausgangsspannung. Innerhalb der jeweiligen Fangbereiche für die gewünschten
Frequenzen entspricht diese Spannung dem gesendeten Tonsignal. Daraus ist
ersichtlich, daß keine Empfangsbeeinträchtigung der einzelnen Kanäle auftritt und auch keine Oberwellensynchronisation der eingestellten Frequenz
f1 (21) mit der Frequenz $1/3 \times f4$ (25), sowie der eingestellten Frequenz
f4 (24) mit der Frequenz $3 \times f1$ (26) innerhalb des ausgenützten Frequenzbandes
(27) eintritt.

Bei dieser Erfindung handelt es sich um eine Vorrichtung zur drahtlosen
Übertragung mehrer Tonsignale mittels Infrarotstrahlung (7) (8) (9) (10)
zu einer Vielzahl von kleinen, sehr einfach aufgebauten Empfängern (11),
die mit einem Wahlschalter (20) auf den Empfang des gewünschten Tonsignals
eingestellt und mittels Kopfhörer abgehört werden können.

Gelöst wird diese Aufgabe dadurch, daß zur Übertragung der einzelnen Tonsignale in einem Sender (2) jeweils ein frequenzmoduliertes Hilfsträgersignal erzeugt wird, das über eine Hochfrequenzleitung zu einer Infrarot-
Antennenordnung (3) (4) (5) (6), die mittels einer Phasenregelschaltung
gleichphasig auf das frequenzmodulierte Hilfsträgersignal synchronisiert
wird, gelangt, wobei eine Erweiterung der Antennenanordnung Fig. 2 dadurch
möglich gemacht wird, daß jede weitere angeschlossene Infrarot-Antenne (7a)
(7b) wiederum gleichphasig von der vorhergehenden synchronisiert wird.

Bei der Anwendung im Kinobereich könnte die Filmkopie neben der Originaltonspur zusätzlich Tonspuren mit zugeordneten Simultanübersetzungen der
Sprache führen, diese über einen Adapter zugleich abgetastet, dem Sender
(2) zugeführt und von diesem über die Antennen (3-6) in den Kinosaal ausgestrahlt werden.

Auch die Geräteanordnung gemäß A/Patent Nr. 36 22 32 als Einrichtung zur
Wiedergabe der nachträglichen synchronen Übersetzung der Sprache von Filmkopien könnte in Kombination mit der gegenständlichen Erfindung optimal erweitert werden, wobei die im A/Patent Nr. 36 22 32 von den Vorrangschaltungen abgegebenen Sprachsignale anstatt dem Saal-lautsprecher nun dem Sender (2) und von diesem über die Antennen (3-6) zur Ausstrahlung abgegeben werden.

Der Kinobesucher kann daher individuell seine gewünschte Sprache über seinen Empfänger (11) mittels Kopfhörer (12) abhören.
Der Kopfhörer (12) ist einseitig ausgeführt, sodaß über das andere Ohr der akustische Gesamteindruck wahrgenommen und lediglich durch den Kopfhörer der übersetzte Simultantext hörbar ist, dessen Lautstärke wahlweise vom Benützer einstellbar ist.

Ein weiteres Anwendungsgebiet dieser Erfindung bieten die Sprech- und Gesangstheater.
In diesem Anwendungsbereich war bisher eine Simultanübersetzung nicht praktiziert. Gegenständliche Erfindung macht es nun möglich, den Sprechtext der Schauspieler oder den Text der Sänger bei Operette und Oper in mehrere Sprachen übersetzt dem Besucher wahlweise hörbar zu machen. Da jedoch der Ablaufrythmus der Theateraufführung oder der Gesangsdarbietung von Oper oder Operette von Ort zu Ort, bedingt durch die Darsteller und die Regie, abweichend sein kann, wird von der Generalprobe ein soge-nanntes Mutterband der Originalaufführung aufgezeichnet und gleichzeitig beim jeweiligen Spracheinsatz eine Kodierung versehen.
Die Kodierung schaltet durch Impulse das mehrspurige Sprachband mit den Simultanübersetzungen von Text zu Text automatisch weiter.

Etwa noch auftretende geringe Bandverschiebungen können vom zuständigen Bühnenpersonal (Sprechkontrolle) bei gleichzeitiger Abhörkontrolle mit Plus oder Minus korrigiert werden. Diese Synchronkontrollen sind auch automatisch möglich.

Das Simultanband ist wie ausgeführt mehrspurig und wird vom Mutterband , welches synchron zur Aufführung mitläuft, durch seine Kodierung schrittweise von Texteinsatz zu Texteinsatz geschaltet.
Jede Spur des Simultanbandes ist daher einer bestimmten Sprache zugeordnet, deren Aufzeichnungssignal durch den Sender (2) über die Antennen (3-6) ausgestrahlt und von den Empfängern (11) je nach Signalwahl empfangen werden können.

Patentansprüche:

— 4 —

0131917

Anspruch 1
Mehrkanal - Tonübertragungssystem in freqzenzmultiplexbetrieb unter
Verwendung von intensitätsmodulierter Infrarotstrahlung zur Ermöglichung
der Wiedergabe von Tonaufzeichnungen auf Filmkopien, von Sprach- oder
Gesangsdarbietungen außer der Originalfassung in gleichzeitig mehrere
Sprachfassungen dadurch gekennzeichnet, daß die Zahl der Infrarotantennen (Fig 2) der Anlage an die jeweilige Übertragungsraumgröße angepaßt wird.

Anspruch 2
Mehrkanal-Tonübertragungssystem nach Anspruch 1 dadurch gekennzeichnet,
daß der Empfang der intensitätsmodulierten Infrarotstrahlung nach Sammlung
der einfallenden Strahlung mittels einer Zylinderlinse (13) unter teilweiser Ausnützung einer für Infrarot-Fernsteuerung geeigneten integrierten
Vorverstärker-Schaltung (16) in Verbindung mit einer 4-stufigen Umschaltung (20) der Resonanzfrequenzen eines vorgeschalteten, durch mehrere
parallel geschaltete Fotodioden (14) angesteuerten Filters (15) realisiert
wird, wobei die Ausnützung der in der integrierten Vorverstärkerschaltung
(16) enthaltenen Schwellwertschaltung (16a) zum schwellwertabhängigen
Trennen des NF Verstärkers (19) von der Versorgungsspannung über eine
Trennstufe (17) eine wirksame, stromsparende Geräuschunterdrückung ermöglicht.

Anspruch 3
Mehrkanal-Tonübertragungssystem nach Anspruch 2 dadurch gekennzeichnet, daß
die mehrkanalige Demodulation des frequenzmodulierten Hilfsträgersignales
unter Verwendung einer integrierten Phasenregelschaltung (18) erfolgt, wobei
durch Umschaltung (20) des internen Oszillators ein Freqenzversatz des
Demulators derart ermöglicht wird, daß keine Überlappung der Haltebereiche
der Phasenregelschaltung, sowie auch keine störende Oberwellensynchronisation
eintritt und das demodulierte Tonsignal über eine Gegentakt – B – Verstärkerstufe (19) abgegeben wird, wobei die Wirkung der Rauschunterdrückung
derart erfolgt, daß ohne ein vorhandenes Infrarotsignal die gesamte Stromaufnahme der Tonfrequenzverstärkerschaltung unterbunden ist.

Anspruch 4
Mehrkanal-Tonübertragungssystem nach Anspruch 3 dadurch gekennzeichnet, daß
durch dieses System alle auf einer Filmkopie aufgebrachten mehrsprachigen
Tonspuren durch einen gemeinsamen Adapter abgetastet , dem Sender (2) zugeführt und von diesem über die Antennen (3-6) in den Kinosaal ausgestrahlt
und von den Kleinempfängern (11) empfangen werden.

Anspruch 5
Mehrkanal-Tonübertragungssystem nach Anspruch 4 dadurch gekennzeichnet, daß
der Kinobesucher individuell seine gewünschte Sprache über seinen Empfänger
(11) mittels Kopfhörer (12), dieser einseitig ausgeführt- um mit dem anderen
Ohr den akustischen Gesamteindruck wahrzunehmen, dessen Lautstärke wahlweise auf die Lautstärke des akustischen Gesamteindruckes abgestimmt hörbar
gemacht wird.

Anspruch 6
Um den durch Darsteller und Regie von Bühne zu Bühne unterschiedlichen Ablaufrythmus von Theateraufführungen, Gesangsdarbietungen von Oper und
Operette auszugleichen, ist das Merhrkanal-Tonübertragungssystem nach Anspruch 5 dadurch gekennzeichnet, daß von der Generalprobe ein Mutterband
aufgezeichnet und gleichzeitig beim jeweiligen Spracheinsatz mit einer
Kodierung versehen und durch Impulse das mehrspurige Sprachband mit den
Simultanübersetzungen von Text zu Text automatisch weitergeschaltet, dem
Sender (2) zugeführt und durch die Antennen (3-6) im Saal abgestrahlt und
von dem Empfänger (11) über die Kopfhörer (12) abgehört werden.

fig 1    0131917

fig 2

fig 3